# EUROPEAN PATENT SPECIFICATION

(11) **EP 2 691 218 B1**
(45) Date of publication and mention of the grant of the patent: **13.04.2016**
(21) Application number: 12763041.6
(22) Date of filing: 14.02.2012
(51) Int. Cl.: B27D 1/04, B27D 1/08, B32B 21/02, B32B 21/08, E04F 15/10

(54) **SYNTHETIC WOOD HAVING AN ELASTIC LAYER**
SYNTHETISCHES HOLZ ENTHALTEND EINE ELASTISCHE SCHICHT
BOIS ARTIFICIEL AYANT UNE COUCHE ÉLASTIQUE

(30) Priority: 30.03.2011 KR 20110028621
(43) Date of publication of application: 05.02.2014
(73) Proprietor: LG Hausys, Ltd., Youngdungpo-gu Seoul 150-721 (KR)
(72) Inventor: KIM, Dong Jin, Daejeon 300-770 (KR); NAM, Kyung Gu, Daejeon 302-816 (KR); SON, Jung Il, Yongin-si Gyeonggi-do 446-752 (KR)
(74) Representative: Goddar, Heinz J.
(86) International application number: PCT/KR2012/001113
(87) International publication number: WO 2012/134054

(56) References cited:
- DE-A1- 10 321 757
- JP-A- 10 238 016
- KR-A- 20100 032 403
- KR-A- 20100 065 746
- KR-B1- 100 944 453
- US-A1- 2002 143 083
- US-A1- 2007 154 689
- US-A1- 2008 193 703
- DATABASE WPI Week 197832 Thomson Scientific, London, GB; AN 1978-57446A XP002727311, & JP S53 74723 A (MITSUI TOATSU CHEM INC) 3 July 1978 (1978-07-03)

## Description

### Technical Field

The present invention relates to a synthetic wood having an elastic layer, and more particularly to a synthetic wood having an elastic layer, which a rubber material is provided thereon to increase surface elasticity thereof and improve its anti-slip function, thereby increasing a contact surface area upon walking and thus improving slip resistance.

### Background Art

Recently, the synthetic wood is being recognized as a substitute for a general wooden material due to its excellent exterior effect and environmentally friendly characteristics.

The synthetic wood has been used widely in the United states and Japan from about 15 years ago and it was from about 3 or 4 years ago to be used in earnest in Korea. Due to its harmlessness to human body, recyclability, environmentally friendly characteristics, excellent heat resistance and durability, the future relevant market is expected to be increased. The synthetic wood is being used widely as an alternative construction material which can be used in a public place such as a park, a walk and a school.

Typically, in manufacturing processes for the synthetic wood, a plasticizer, an adhesive, a pigment, an infrared blocker and a stabilizer are mixed at high temperature, and wood flour and rice husks are further mixed in a small amount and then the mixture is extrusion-molded with high pressure.

In other words, to manufacture the synthetic wood, the mixture of the plastic and wood flour is injection-molded into a certain shape. The mixture is extruded with high pressure, thereby injection-molding a product.

A deck product which is used in a footpath and a walk is a flooring material on which many people walk. It is important to prevent negligent accidents due to the slip, and particularly, in case of being moisture on the road surface after the snow or rain, there is a danger of injury due to the slip.

Therefore, there has been proposed various method of improving the anti-slip function. For example, there are a method of forming an uneven pattern on the synthetic wood, a method of forming fine protrusions or projections on the synthetic wood by adding various inorganic materials or using a foaming or etching process, or a brushing method of a surface of the synthetic wood to provide a high surface roughness.

However, in case of the method of forming the uneven pattern on the synthetic wood, since foreign substances such as moisture and sands can be easily accumulated thereon, it becomes further slippery.

And in case of the method of adding the inorganic materials or the brushing method, the anti-slip functions can be maintained at the initiatory stage, but normal wear and tear occurs as times goes by. Thus, there is a problem that the worn portion thereof becomes further slippery.

Further, in case of improving the surface roughness using the inorganic materials, if a pedestrian, particularly a child falls down, body parts such as hands and a face may be scratched or wounded.

Therefore, it has been required to develop new synthetic wood having excellent anti-slip performance while maintaining its own properties and appearance.

### Disclosure of Invention

### Technical Problem

An embodiment of the present invention is directed to providing a synthetic wood having an elastic layer, on which a rubber material is provided so as to form the surface elastic layer, thereby increasing a contact surface area upon walking and thus improving its anti-slip function.

### Solution to Problem

To achieve the object of the present invention, the present invention provides a synthetic wood having an elastic layer, wherein a synthetic wood layer and the elastic layer formed at one side of the synthetic wood layer are formed integrally.

Preferably, the synthetic wood layer is integrally formed with the elastic layer through a dual extruding process.

The elastic layer is composed of 15 to 35 parts by weight of a synthetic resin, 5 to 15 parts by weight of a thermoplastic elastomer, 50 to 70 parts by weight of wood flour and 1 to 15 parts by weight of an additive.

Further, the present invention provides a method of manufacturing a synthetic wood having an elastic layer, including extruding a synthetic wood layer through one side of an extrusion mold; extruding an elastic layer through the other side of the extrusion mold; forming a boundary between the synthetic wood layer and the elastic layer; and cooling the synthetic wood, in which the synthetic wood layer and the elastic layer are integrally formed, to a predetermined temperature.

Further, the method may further include cutting the cooled synthetic wood having the elastic layer in a predetermined length.

### Advantageous Effects of Invention

According to the present invention as described above, it is possible to provide a synthetic wood having an elastic layer, on which a rubber material is provided so as to form the surface elastic layer, which maintains the synthetic wood's own appearance and properties having environmentally friendly characteristics, excellent heat resistance and durability.

And, according to the present invention, it is possible to provide a synthetic wood having an elastic layer, on which a rubber material is provided so as to form the surface elastic layer, thereby increasing a contact surface area upon walking and thus improving its anti-slip function.

### Brief Description of Drawings

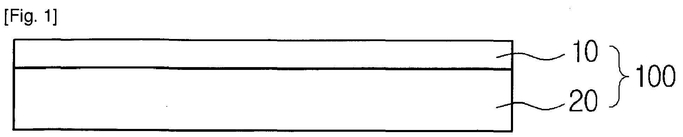

Fig. 1 is a view of a synthetic wood having an elastic layer according to an embodiment of the present invention.

### [Detailed Description of Main Elements]

10: elastic layer 20: synthetic wood layer
100: synthetic wood

### Mode for the Invention

Hereinafter, the embodiments of the present invention will be described in detail with reference to accompanying drawings.

Herein, the same reference numerals are given to the same or corresponding parts.

Referring to Fig. 1, a synthetic wood 100 having an elastic layer 10 according to an embodiment of the present invention is characterized in that the elastic layer 10 is integrally formed on an upper surface of a synthetic wood layer 20, and particularly, the elastic layer 10 is integrally formed on the upper surface of the synthetic wood layer 20 by a dual extrusion method.

Hereinafter, each construction element of the synthetic wood 100 having the elastic layer 10 will be described detailedly.

In the synthetic wood 100 having the elastic layer 10 according to the present invention, the synthetic wood layer 20 is manufactured by mixing a plasticizer, an adhesive, a pigment, an infrared blocker and a stabilizer at high temperature, further mixing wood flour and rice husks in a small amount and then extruding the mixture with high pressure. A composition and a composition ratio thereof are changed according to its manufacturers.

Further, with respect to the elastic layer 10 composed of 25 parts by weight of a synthetic resin, 10 parts by weight of a thermoplastic elastomer, 60 parts by weight of wood flour and 5 parts by weight of an additive, the slip resistance was measured in the state that a static load of 60kg was applied thereto, on the basis of KS M 3510 (a testing method of a polymer flooring material). That is, the slip resistance was measured by a reciprocating friction test of about 10,000 times using shoes having a urethane sole, and a result thereof is shown in table 1.
Table 1

**[Table 1]**

| Sample | Frictional coefficient before wearing | Frictional coefficient after wearing |
|---|---|---|
| Embodiment of the present invention | 0.63 | 0.63 |
| Conventional product (comparative example 1) | 0.52 | 0.46 |
| Product having high surface roughness (comparative example 2) | 0.70 | 0.52 |

Therefore, according to the synthetic wood 100 having the elastic layer of the present invention, since the thermoplastic elastomer is added to a surface thereof in order to permanently increase the surface elasticity, it is possible to increase a contact surface area between pedestrian's shoes (mostly, rubber) and the synthetic wood 100 and thus improve the anti-slip performance.

In other words, when a concentrated load of a pedestrian having an average weight of about 60kg is applied to upper surface of the synthetic wood, i.e., the elastic layer 10, a product of the present invention having high surface elasticity is pushed down in a moment, and the contact surface area between the pedestrian's shoes and the synthetic wood 100 is increased, thereby providing excellent anti-slip performance.

Generally, the harder and stiffer the surface is, the more the surface is worn. However, since the synthetic wood having the elastic layer according to the embodiment of the present invention has high elasticity, the wearing is reduced, thereby providing excellent anti-slip performance.

Hereinafter, a method of manufacturing the synthetic wood having the elastic layer according to an embodiment of the present invention will be described.

In the method of manufacturing the synthetic wood having the elastic layer according to the embodiment of the present invention includes s step S100 of extruding a synthetic wood layer through one side of an extrusion mold; a step S200 of extruding an elastic layer through the other side of the extrusion mold; a step S300 of forming a boundary between the synthetic wood layer and the elastic layer; and a step S400 of cooling the synthetic wood, in which the synthetic wood layer and the elastic layer are integrally formed, to a predetermined temperature.

Herein, the step S100 of extruding the synthetic wood layer and the step S200 of extruding the elastic layer through the other side of the extrusion mold are performed at a front side of the extrusion mold, and the steps S300 and S400 are performed at a rear side thereof.

The method may further include a step S500 of cutting the synthetic wood having the elastic layer in a predetermined length.

The embodiments of the present invention, as described above, are just examples, and thus the present invention is not limited to them.

According to the present invention, the rubber material is provided on the upper surface of the synthetic wood so as to form the surface elastic layer. Therefore, it is possible to provide the synthetic wood which has the environmentally friendly characteristics, excellent heat resistance and durability while maintaining its own properties and appearance.

Further, according to the synthetic wood of the present invention, since the contact surface area is increased upon the walking, the slip resistance is improved.

## Claims

1. A synthetic wood having an elastic layer, wherein a synthetic wood layer and the elastic layer formed at one side of the synthetic wood layer are formed integrally, wherein the elastic layer is composed of 15 to 35 parts by weight of a synthetic resin, 5 to 15 parts by weight of a thermoplastic elastomer, 50 to 70 parts by weight of wood flour and 1 to 15 parts by weight of an additive.

2. The synthetic wood of claim 1, wherein the synthetic wood layer is integrally formed with the elastic layer through a dual extruding process.

3. A method of manufacturing a synthetic wood having an elastic layer, comprising :
extruding a synthetic wood layer through one side of an extrusion mold;
extruding an elastic layer through the other side of the extrusion mold;
forming the synthetic wood layer and the elastic layer integrally with a boundary herebetween; and
cooling the synthetic wood, in which the synthetic wood layer and the elastic layer are integrally formed, to a predetermined temperature, wherein the elastic layer is composed of 15 to 35 parts by weight of a synthetic resin, 5 to 15 parts by weight of a thermoplastic elastomer, 50 to 70 parts by weight of wood flour and 1 to 15 parts by weight of an additive.

4. The method of claim 3, further comprising cutting the cooled synthetic wood having the elastic layer in a predetermined length.

## Patentansprüche

1. Synthetisches Holz mit einer elastischen Schicht, wobei eine synthetische Holzschicht und die elastische Schicht, die auf einer Seite der synthetischen Holzschicht gebildet ist, integral ausgebildet sind, wobei die elastische Schicht aus 15-35 Gewichtsteilen eines synthetischen Harzes, 5-15 Gewichtsteilen eines thermoplastischen Elastomers, 50-70 Gewichtsteilen Holzmehl und 1-15 Gewichtsteilen eines Additivs zusammengesetzt ist.

2. Synthetisches Holz nach Anspruch 1, wobei die synthetische Holzschicht integral mit der elastischen Schicht durch ein Doppelextrusionsverfahren ausgebildet ist.

3. Verfahren zum Herstellen eines synthetischen Holzes mit einer elastischen Schicht, welches umfasst:
Extrudieren einer synthetischen Holzschicht durch eine Seite einer Extrusionsform;
Extrudieren einer elastischen Schicht durch die andere Seite der Extrusionsform;
Bilden der synthetischen Holzschicht und der elastischen Schicht integral mit einer Grenze dazwischen;
Abkühlen des synthetischen Holzes, bei dem die synthetische Holzschicht und die elastische Schicht integral ausgebildet sind, auf eine vorgegebene Temperatur, wobei die elastische Schicht zusammengesetzt ist aus 15-35 Gewichtsteilen eines synthetischen Harzes, 5-15 Gewichtsteilen eines thermoplastischen Elastomers, 50-70 Gewichtsteilen Holzmehl und 1-15 Gewichtsteilen eines Additivs.

4. Verfahren Anspruch 3, weiter umfassend Schneiden des abgekühlten synthetischen Holzes mit der elastischen Schicht in eine vorgegebene Länge.

## Revendications

1. Un bois synthétique ayant une couche élastique, dans lequel une couche de bois synthétique et la couche élastique formée sur un côté de la couche de bois synthétique sont formées d'une seule pièce, dans lequel la couche élastique comprend entre 15 et 35 parties en poids d'une résine synthétique, entre 5 et 15 parties en poids d'un élastomère thermoplastique, entre 50 et 70 parties en poids de farine de bois et entre 1 et 15 parties en poids d'un additif.

2. Le bois synthétique selon la revendication 1, dans lequel la couche de bois synthétique est formée d'une seule pièce avec la couche élastique par le un processus d'extrusion double.

3. Un procédé de fabrication d'un bois synthétique ayant une couche élastique, comprenant :
l'extrusion d'une couche de bois synthétique à travers un côté d'un moule d'extrusion ;
l'extrusion d'une couche élastique à travers l'autre côté du moule d'extrusion ;
la formation de la couche de bois synthétique et de la couche élastique d'une seule pièce avec une limite entre elles ; et
le refroidissement du bois synthétique, où la couche de bois synthétique et la couche élastique sont formées d'une seule pièce, à une température prédéterminée, dans lequel la couche élastique comprend entre 15 et 35 parties en poids d'une résine synthétique, entre 5 et 15 parties en poids d'un élastomère thermoplastique, entre 50 et 70 parties en poids de farine de bois et entre 1 et 15 parties en poids d'un additif.

4. Le procédé selon la revendication 3, comprenant en outre le coupage du bois synthétique refroidi ayant la couche élastique à une longueur prédéterminée.
